# EUROPEAN PATENT SPECIFICATION

(11) **EP 3 187 520 B1**
(45) Date of publication and mention of the grant of the patent: **24.02.2021**
(21) Application number: 15835078.5
(22) Date of filing: 25.08.2015
(51) Int. Cl.: B29C 39/02, C08G 18/42, C08K 7/24, C08G 18/36, C08G 18/08, C08G 18/76, F16F 15/08, F16F 15/04, C08K 9/10, C08G 18/79, C08K 5/01, C09K 21/04, C09K 21/10, C09K 21/12, C09K 5/06

(54) **VIBRATION-DAMPING URETHANE RESIN COMPOSITION, VIBRATION-DAMPING MOLDED URETHANE RESIN OBJECT, AND METHOD FOR FORMING SAID MOLDED OBJECT**
SCHWINGUNGSDÄMPFENDE URETHANHARZZUSAMMENSETZUNG, SCHWINGUNGSDÄMPFENDER URETHANHARZFORMKÖRPER UND VERFAHREN ZUR HERSTELLUNG DIESES FORMKÖRPERS
COMPOSITION DE RÉSINE D'URÉTHANE AMORTISSANT LES VIBRATIONS, OBJET MOULÉ EN RÉSINE D'URÉTHANE AMORTISSANT LES VIBRATIONS, ET PROCÉDÉ DE FORMATION DUDIT OBJET MOULÉ

(30) Priority: 28.08.2014 JP 2014174420
(43) Date of publication of application: 05.07.2017
(73) Proprietor: Chugoku Marine Paints, Ltd., Hiroshima 739-0652 (JP)
(72) Inventor: ITO, Genta, Yasu-shi Shiga 520-2323 (JP); KONO, Hiroyuki, Yasu-shi Shiga 520-2323 (JP); OKAWA, Hidenori, Yasu-shi Shiga 520-2323 (JP)
(74) Representative: Hoffmann Eitle
(86) International application number: PCT/JP2015/073889
(87) International publication number: WO 2016/031825

(56) References cited:
- EP-A1- 1 022 297
- DE-A1- 19 936 481
- JP-A- 2001 288 240
- JP-A- 2005 289 043
- JP-A- 2009 286 816
- US-A1- 2013 296 449
- DATABASE WPI Week 200376 Thomson Scientific, London, GB; AN 2003-807518 XP002777950, & JP 2003 147197 A (HITACHI CHEM CO LTD) 21 May 2003 (2003-05-21)

## Description

### Technical Field

The present invention relates to a vibration-damping urethane resin composition, a vibration-damping urethane resin molded product and a method for forming the molded product.

### Background Art

At a place under a marine engine, a filling material excellent in bearing to load and resistance to heat is used for the purpose of carrying out installation of equipment accurately and simply. However, this filling material has no vibration-damping properties, and therefore, there has been a fear of damage of an engine part due to vibration of an engine. Then, application of a vibration-damping material to the place under a marine engine so that the vibration of the engine might not be transmitted to the engine part is being studied.

On the other hand, as the vibration-damping material, a rubber-based material having flexibility or a vibration-damping urethane resin composition is generally used.

As such a vibration-damping material, a material containing an acrylic urethane resin is described in, for example, a patent literature 1.

In a patent literature 2, a resin composition containing particles capable of absorbing, reducing and suppressing vibration energy and a binder resin is described, and as the particles, core-shell particles each having a shell formed of a crosslinked resin are described.

In a patent literature 3, a heat-storing low-resilience polyurethane foam containing particles capable of storing heat is described, wherein the particles are described as microcapsules including a latent heat storage agent in the shell.

In patent literature 4, a polyurethane resin molded article for use in automobile interior materials is described, which is produced from a mixture containing a polyol, a polyisocyanate, a catalyst, a chain elongation agent and other auxiliary agents.

### Citation List

### Patent Literature

Patent literature 1: JP-A-2005-289043
Patent literature 2: JP-A-2006-335279
Patent literature 3: JP-A-2001-288240
Patent literature 4: JP-A-2009-286816

### Summary of Invention

### Technical Problem

The aforesaid conventional vibration-damping materials are poor not only in load bearing, heat resistance, hydrolytic resistance and acid resistance but also in resistance to mechanical stress such as abrasion and impact. Moreover, such materials undergo plastic deformation due to heat, and therefore, they are not suited for places where a heavy load is applied thereto and they are used in a high-temperature atmosphere, such as a place under a marine engine.

Furthermore, in a molded product obtained from a vibration-damping resin composition containing microcapsules having outer shells formed from an organic resin or porous bodies formed from an organic resin, the resin of the outer shells has an extremely strong structure, and therefore, there is a problem that the molded product is hardly deformed and hardly converts vibration energy to thermal energy.

The present invention has been made in the light of the above problem, and it is an object of the present invention to provide a resin composition capable of readily forming a molded product having excellent creep resistance and having a large loss factor.

### Solution to Problem

In order to solve the above problem, the present inventors have earnestly studied, and as a result, they have found that the above object can be achieved by a resin composition comprising a castor oil polyol, an isocyanate and specific inorganic particles and has accomplished the present invention.

Embodiments of the constitution of the present invention are the following [1] to [14].

[1] A composition, which is a vibration-damping urethane resin composition comprising a castor oil polyol (A), an isocyanate (B) and inorganic particles (C) containing a phase change material.
[2] The composition as stated in [1], wherein the hydroxyl value of the castor oil polyol (A) is ≥ 300 mgKOH/g and the number of functional groups thereof is ≥ 3.
[3] The composition as stated in [1] or [2], wherein the viscosity of the castor oil polyol (A) at 25°C is ≤ 8,000 mPa·s as measured by an Ubbelohde viscometer in accordance with JIS Z8803.
[4] The composition as stated in any one of [1] to [3], containing the inorganic particles (C) in amounts of 1 to 25% by mass.
[5] The composition as stated in any one of [1] to [4], wherein the phase change material is at least one kind selected from paraffin, wax, a fatty acid and a polyalkylene glycol.
[6] The composition as stated in any one of [1] to [5], wherein the melting point of the phase change material is -30 to 200°C.
[7] The composition as stated in any one of [1] to [6], wherein the isocyanate (B) is at least one kind selected from carbodiimide-modified diphenylmethane diisocyanate and tolylene diisocyanate.
[8] The composition as stated in any one of [1] to [7], further comprising one, two or three kind(s) selected from an inorganic pigment (D), a flame retardant (E) and an additive (F).
[9] The composition as stated in any one of [1] to [8], being of a two component type.
[10] A molded product, which is a vibration-damping urethane resin molded product formed from the composition as stated in any one of [1] to [9].
[11] The molded product as stated in [10], having
   (1) a loss factor (tanδ) at 80°C and 1 Hz of ≥ 0.4 as measured according to the chapter "measurement of loss factor" as described in paragraph [0098], and
   (2) a creep change ratio given when a load of 4.5 MPa is applied at 70°C for one week of ≤ 25% as measured according to the chapter "measurement of creep change ratio" as described in paragraph [0100] .
[12] The molded product as stated in [11], the flammability of which satisfies HB criteria of the UL94 standard as measured according to the chapter "evaluation of flammability" as described in paragraphs [0102] and [0103].
[13] The use of the molded product as stated in any one of [10] to [12] at a place under a marine engine.
[14] A method for forming a vibration-damping urethane resin molded product, comprising pouring the composition as stated in any one of [1] to [9] into a target place to form a molded product.

### Advantageous Effects of Invention

According to the present invention, a vibration-damping urethane resin composition capable of readily forming a molded product having excellent creep resistance and having a large loss factor can be obtained. A molded product formed from such a resin composition has a high vibration-damping effect, is excellent in resistance to compressive load and impact resistance and less suffers plastic deformation due to heat, so that the molded product can be preferably used even under severe conditions, e.g., such a high-load, high-temperature atmosphere as in a place under an engine.

According to the present invention, further, a vibration-damping urethane resin composition which exhibits high fluidity even if it is solvent-free can be obtained, and therefore, a molded product can be formed by a method of casting. On this account, by using the vibration-damping urethane resin composition of the present invention, a molded product having the above effect can be formed in a desired place (even in a slight gap for fixing equipment), and a molded product hardly suffering thermal deformation or cure shrinkage can be formed with less burden on the environment.

Since the composition of the present invention has the above effects, it can be preferably used as a composition for forming a molded product for fixing equipment, for fixing equipment which is to be placed in a high-load, high-temperature atmosphere or for fixing equipment which is required to have vibration-damping properties and is to be placed in a high-load, high-temperature atmosphere, such as a lower part of a marine engine.

According to the composition of the present invention containing a flame retardant, a molded product which has excellent creep resistance and is excellent in flame retardancy while having a large loss factor can be obtained.

### Description of Embodiments

### «Vibration-damping urethane resin composition»

The vibration-damping urethane resin composition of the present invention (also referred to as a "composition of the present invention" hereinafter) comprises a castor oil polyol (A), an isocyanate (B) and inorganic particles (C) containing a phase change material, and may comprise an inorganic pigment (D), a flame retardant (E) and an additive (F) when needed, within limits not detrimental to the effects of the present invention.

### [Castor oil polyol (A)]

Castor oil is a light yellow, viscous non-drying oil obtained from seeds of a plant referred to castor-oil plant of Euphorbiaceae. In castor oil, about 90% of the total amount of fatty acids contained is ricinoleic acid, and the castor oil has a hydroxyl group, a double bond and an ester linkage in one molecule, so that it has unique characteristics different from those of other vegetable oils and fats. Examples of the characteristics include excellent stability, flexibility, electrical insulation properties, water resistance and impact resistance. Since the composition of the present invention contains a castor oil polyol using castor oil having such characteristics as a starting material, a molded product having excellent heat resistance, hydrolytic resistance and acid resistance in addition to resistance to mechanical stress, such as friction or impact, can be formed.

Moreover, by the use of the castor oil polyol (A), a molded product hardly suffering thermal deformation and cure shrinkage can be formed.

In conventional vibration-damping materials, polyether polyol or polyester polyol is sometimes used. As a result of earnest studies by the present inventor, however, when polyether polyol is used, the resulting molded product is so flexible that desired creep resistance tends to be not exhibited. When polyester polyol is used, the resulting molded product is so rigid that desired vibration-damping properties tend to be not exhibited.

On the other hand, by using the castor oil polyol (A) in the present invention, a molded product exerting the aforesaid effects can be obtained.

Although the castor oil polyol (A) is not specifically restricted, examples thereof include a transesterification product of at least one kind of castor oil and an alkylene oxide adduct of castor oil and at least one kind of alcohol, polyester polyol and polyether polyol; an ester compound of a castor oil fatty acid (this is a fatty acid obtained from castor oil and is usually a mixture of ricinoleic acid and oleic acid) and at least one kind of alcohol, polyester polyol and polyether polyol; a diol type partial dehydration product or partial acylation product of castor oil; a hydrogenation product of a compound of the above transesterification product, the above ester compound, the above partial dehydration product or partial acylation product; and a compound obtained by polymerizing castor oil to obtain polymerized castor oil and allowing an transesterification reaction product of the resulting polymerized castor oil to react with caprolactone.

As the castor oil polyol (A), a compound synthesized in accordance with a hitherto publicly known method may be used, or a commercial product may be used.

Examples of the commercial products include URIC H-102, URIC H-92, URIC H-81, URIC H-73X, URIC H-62, URIC H-420, URIC H-854, URIC H-870, URIC H-1824, URIC AC-006, URIC Y-406 and URIC HF-2009 (all available from Itoh Oil Chemicals Co., Ltd.), and HS CM-075P, HS PPE-12H, HS 3P-255, HS 3G-500B, HS 2B-5500, HS 2G-120, TLM and HS CM (all available from Hokoku Corporation).

The castor oil polyol (A) is not specifically restricted, but for example, a polyol whose hydroxyl value is 30 to 400 mgKOH/g and whose number of functional groups is 1 to 6 can be mentioned. The castor oil polyol (A) is preferably a polyol whose hydroxyl value is not less than 300 mgKOH/g and whose number of functional groups is not less than 3, and is more preferably a polyol whose hydroxyl value is not less than 340 mgKOH/g and whose number of functional groups is not less than 3. The upper limit of the hydroxyl value may be 400 mgKOH/g, and the upper limit of the number of functional groups may be 6.

By the use of the castor oil polyol (A) whose hydroxyl value and number of functional groups are within the above ranges, a molded product having excellent vibration-damping properties and creep resistance with a good balance can be obtained, and further, a molded product having high crosslink density, having high strength and excellent heat resistance and having a low creep change ratio can be obtained. By the use of the castor oil polyol (A) whose hydroxyl value and number of functional groups are within the above ranges, moreover, a molded product exhibiting a high loss factor even at a high temperature can be obtained.

The number of functional groups indicates the number of hydroxyl groups in one molecule of the castor oil polyol (A).

Specific examples of the castor oil polyols (A) whose hydroxyl value is not less than 300 mgKOH/g and whose number of functional groups is not less than 3 include URIC H-102, URIC H-92 and URIC H-81 (available from Itoh Oil Chemicals Co., Ltd.).

The viscosity of the castor oil polyol (A), as measured by an Ubbelohde viscometer in accordance with JIS Z8803 at 25°C, is preferably not more than 8,000 mPa·s, more preferably not more than 6, 000 mPa·s s, particularly preferably not more than 3, 000 mPa·s. The lower limit of the viscosity of the castor oil polyol (A) is preferably 30 mPa·s, more preferably 300 mPa·s.

The number-average molecular weight (Mn) of the castor oil polyol (A) is preferably not more than 4,000, more preferably not more than 2,500, particularly preferably not more than 2,000. The lower limit of Mn of the castor oil polyol (A) is preferably 200, more preferably 300.

The Mn can be determined by calculation based on the hydroxyl value of the castor oil polyol (A).

In general, the viscosity of the castor oil polyol (A) tends to become higher as the Mn thereof is increased.

By the use of the castor oil polyol (A) having Mn and a viscosity in the above ranges, a vibration-damping urethane resin composition which exhibits high fluidity even if it is solvent-free can be obtained, and a molded product can be formed by a method of casting, so that such Mn and viscosity are preferable.

The content of the castor oil polyol (A) is preferably 25 to 80% by mass, more preferably 30 to 70% by mass, particularly preferably 35 to 60% by mass, based on the total amount of the composition of the present invention. When the content of the castor oil polyol (A) is in the above range, a molded product excellent in creep resistance and vibration-damping properties can be obtained. The castor oil polyols (A) may be used singly or may be used two or more kinds.

### [Isocyanate (B)]

The isocyanate (B) has only to be a compound which can be cured by the reaction with the castor oil polyol (A). Examples of such isocyanates (B) include aromatic polyisocyanates such as diphenylmethane diisocyanate (abbreviated to "MDI" hereinafter, [e.g., 2,2'-MDI, 2,4'-MDI, 4,4'-MDI, polymeric MDI (crude MDI)]), tolylene diisocyanate (abbreviated to "TDI" hereinafter, [e.g., 2,4-TDI, 2,6-TDI]) and naphthalene diisocyanate, aliphatic polyisocatantes such as hexamethylene diisocyanate, isophorone diisocyanate and xylylene diisocyanate, carbodiimide-modified products of the above polyisocyanate, and polyurethane prepolymers obtained by the reaction of an isocyanate compound with a low-molecular polyol.

Of these, carbodiimide-modified isocyanate and/or TDI is preferably used as the isocyanate (B) from the viewpoint that a molded product excellent in mechanical strength and creep resistance can be obtained, and other viewpoints. As the carbodiimide-modified isocyanate, carbodiimide-modified MDI is preferable.

The carbodiimide-modified MDI and the TDI have a flexible segment while having a strong benzene ring as a structure, and therefore, by the use of these compounds, a molded product which has flexibility while having toughness and is excellent in creep resistance and heat resistance can be obtained.

As the isocyanate (B), a component containing the above isocyanate has only to be used, and the component may be obtained by synthesizing it through a hitherto publicly known method, or a commercial product may be used.

Some commercial products contain the above isocyanate as a main ingredient and further contain an isomer of the isocyanate or a solvent, and in the present invention, these commercial products can be used without any restriction. However, from the viewpoint that a molded product having excellent mechanical strength and creep resistance and hardly suffering thermal deformation and cure shrinkage can be formed, and other viewpoints, a solvent-free isocyanate is preferable.

Examples of commercial products of the carbodiimide-modified MDI include Millionate MTL (available from Nippon Polyurethane Industry Co., Ltd.) and Lupranate MM-103 (BASF INOAC Polyurethanes, Ltd.), and examples of the TDI include Cosmonate T-80 (available from Mitsui Chemicals, Inc.) and Lupranate T-80 (BASF INOAC Polyurethanes, Ltd.) .

In the composition of the present invention, the isocyanate (B) is compounded in such a manner that the equivalent ratio of an isocyanate group of the isocyanate (B) to a hydroxyl group of the castor oil polyol (A) preferably becomes NCO/OH=0.7 to 2, more preferably 0.9 to 1.5. When the equivalent ratio is in this range, the isocyanate hardly causes insufficient curing or foaming, so that such an equivalent ratio is preferable. Moreover, a molded product which has high vibration-damping properties, is excellent in resistance to compressive load and impact resistance and less suffers plastic deformation due to heat can be obtained.

The isocyanates (B) may be used singly or may be used two or more kinds.

### [Inorganic particles (C) containing phase change material]

The inorganic particles (C) containing a phase change material are not specifically restricted as long as they are each an inorganic particle in the inside of which a phase change material is contained, and specifically, microcapsules containing a phase change material and having an outer shell formed from an inorganic substance or porous particles formed from an inorganic substance and having pores filled with a phase change material can be mentioned. That is to say, the inorganic particles (C) may be not only in a state where a phase change material is completely covered with an outer shell of an inorganic substance but also in a state where a phase change material is captured in pores of porous particles formed from an inorganic substance and can be in contact with the outside.

By the use of the inorganic particles (C), a molded product which is readily deformed by a load and readily converts vibration energy to thermal energy can be obtained. On this account, the molded product is excellent in vibration-damping effect, creep resistance and heat resistance.

In conventional vibration-damping materials, microcapsules having an outer shell composed of an organic resin such as melamine resin, acrylic resin or urethane resin were sometimes used. As a result of earnest studies by the present inventor, however, such microcapsules are hardly deformed because their outer shells have extremely strong structures, and on this account, when the microcapsules are used, the vibration energy is hardly converted to thermal energy, and desired vibration-damping properties are not exhibited.

On the other hand, by using the inorganic particles (C) in the present invention, a molded product exerting the aforesaid effects can be obtained.

The composition of the present invention is different from a composition obtained by adding inorganic particles having pores and a phase change material independently. In the case where a phase change material is not contained in inorganic particles like this, the phase change material tends to be hardly dispersed homogeneously in the urethane resin composition, and besides, the phase change material tends to bleed out from the resulting molded product, so that desired vibration-damping properties tend to be not exhibited.

On the other hand, it is thought that by using the inorganic particles (C) in the composition of the present invention, the particles (phase change material) can be homogeneously dispersed in the urethane resin composition, and on this account, the aforesaid effects are exerted.

The inorganic particles for forming the outer shells and the porous particles formed from an inorganic substance are preferably particles of a substance having a heat-resistant temperature sufficiently higher than the melting point of the phase change material and having a strength corresponding to the use purpose of the composition of the present invention, and are more preferably inorganic particles having pores, such as silica, calcium carbonate and talc.

As the porous particles, particles formed of an inorganic substance having pores penetrating from the surface to the inside can be mentioned, and the particles may be hollow particles each having a cavity inside or may be particles each having no cavity.

The phase change material is desirably one having a melting point between -30 and 200°C, preferably 0 and 40°C. Examples of the phase change materials include paraffins such as paraffin hydrocarbon, waxes such as natural wax and petroleum wax, fatty acids such as capric acid and lauric acid, polyalkylene glycols such as polyethylene glycol, and hydrates of inorganic compounds such as barium hydroxide octahydrate, strontium hydroxide octahydrate, sodium acetate trihydrate, magnesium acetate tetrahydrate and ammonium aluminum sulfate dodecahydrate. Of these, at least one kind selected from paraffins, waxes, fatty acids and polyalkylene glycols is preferable as the phase change material. In particular, a material undergoing solid-liquid phase transition in the vicinity of room temperature, that is, paraffin hydrocarbon having a melting point of 0 to 40°C, is preferably used. Specific examples thereof include pentadecane, hexadecane, heptadecane, octadecane, nonadecane and icosane.

The phase change materials contained in the inorganic particles may be used singly or two or more kinds.

The inorganic particles (C) may contain a substance other than the phase change material. Such a substance is, for example, a capture substance for stably keeping the phase change material inside the pores.

The average particle diameter of the inorganic particles (C) , as measured by a scanning electron microscope (SEM), is not specifically restricted, but from the viewpoint that a molded product having excellent creep resistance and having a large loss factor is obtained, and other viewpoints, it is preferably 0.5 to 200 µm, more preferably 1 to 150 µm.

Examples of commercial products of the inorganic particles (C) include Riken Resin LA-5-100, LA-15-100 and LA-25-100 (available from Mikiriken Industrial Co., Ltd.).

The content of the inorganic particles (C) is preferably in the range of 1 to 25% by mass based on the total amount of the composition of the present invention. By using the inorganic particles (C) in such amounts, a molded product having excellent creep resistance and having a loss factor tanδ of not less than 0.4 can be readily obtained. The content of the inorganic particles (C) is more preferably 6 to 25% by mass, and by using the inorganic particles (C) in such amounts, a molded product having excellent creep resistance and having a loss factor tanδ of not less than 0.5 can be readily obtained. If the content of the inorganic particles (C) is larger than 25% by mass, the resulting molded product tends to become brittle, and if the content thereof is less than 1% by mass, a molded product having excellent vibration-damping properties tends to be not obtained.

The inorganic particles (C) may be used singly or may be used two or more kinds.

### [Inorganic pigment (D)]

The composition of the present invention may contain an inorganic pigment (D) in order to enhance resistance to creep change. The inorganic pigment (D) is an inorganic substance other than the inorganic particles (C). The inorganic pigments (D) may be used singly or may be used two or more kinds.

Examples of the inorganic pigments (D) include general extender pigments, such as silica, talc, mica, potash feldspar, wollastonite, kaolin, clay, bentonite, titanium oxide, zinc oxide, calcium carbonate, magnesium carbonate and barium sulfate.

Examples of commercial products of the inorganic pigments (D) include TK-1 (silica, available from Tono Keifun Kogyo Cooperative Association), R-5N (titanium dioxide, available from Sakai Chemical Industry Co., Ltd.), Super SS (calcium carbonate, available from Chugoku Kogyo K.K.), TTK Talc (talc, available from Takehara Kagaku Kogyo Co., Ltd.), Mica Powder 200-Mesh (available from Fukuoka Talc Co., Ltd.) and NYGLOS 4W (wollastonite, available from NYCO MINERALS, INC.) .

The particle diameter of the inorganic pigment (D), as measured in accordance with JIS K 5101, Test methods for pigments -- Part 14: Determination of residue on sieve --, is not specifically restricted, but from the viewpoint that a molded product having excellent creep resistance is obtained, and other viewpoints, it is not more than 1,000 µm, more preferably not more than 500 µm.

The content of the inorganic pigment (D) is preferably 0 to 30% by mass based on the total amount of the composition of the present invention, and from the viewpoint of enhancement in creep resistance of the resulting molded product, it is more preferably 5 to 25% by mass. If the inorganic pigment (D) is contained in an amount of more than 30% by mass, vibration-damping properties of the resulting molded product tend to be lowered.

The content of the inorganic particles (C) and the content of the inorganic pigment (D) are respectively preferably in the aforesaid ranges, but the total content of the inorganic particles (C) and the inorganic pigment (D) is preferably 1 to 55% by mass, more preferably 5 to 50% by mass, based on the total amount of the composition of the present invention, from the viewpoint of enhancement in creep resistance of the resulting molded product.

As the inorganic pigment (D), silica is particularly preferably used among the above pigments, and when silica is compounded in an amount of 12 to 25% by mass based on the total amount of the composition of the present invention, the loss factor tanδ of the vibration-damping urethane resin molded product becomes not less than 0.6, and creep resistance can be enhanced without impairing the loss factor.

### [Flame retardant (E)]

In order to enhance flame retardancy, the composition of the present invention may contain a flame retardant (E). The flame retardants (E) may be used singly or may be used two or more kinds.

Examples of the flame retardants (E) include inorganic, halogen flame retardants, phosphorus flame retardants, melamine flame retardants and silicone flame retardants. Of these, the halogen flame retardant containing at least one element selected from a bromine element and a chlorine element exerts an excellent flame-retardant effect. However, when the halogen flame retardant is used and when a molded product obtained from the composition of the present invention is subjected to combustion, a poisonous gas is sometimes generated during combustion. On that account, it is preferable to use a non-halogen flame retardant as the flame retardant (E) .

There are flame retardants in different states, such as states of powder and liquid, but when a liquid flame retardant is added to the composition, lowering of mechanical strength of a molded product obtained from the composition or bleed-out (bleeding) sometimes occurs. Also with regard to a powdery flame retardant, if a large amount is added to the composition, properties inherent in the molded product are sometimes impaired. Therefore, it is preferable to use, as the flame retardant (E), a powdery flame retardant that exerts a flame-retardant effect even in a small amount.

As the flame retardant (E), a phosphorus flame retardant or a melamine flame retardant, each being a non-halogen flame retardant, is particularly preferably used.

Examples of the phosphorus flame retardants include ammonium polyphosphate, phosphoric ester, phosphazene, red phosphorus, triphenyl phosphate (TPP), triallyl phosphate, triethyl phosphate, tricresyl phosphate (TCP) , cresyl phenyl phosphate and an intumescent type flame retardant.

Examples of the melamine flame retardants include melamine, melamine cyanurate and melamine phosphate.

The intumescent type flame retardant that is one of the phosphorus flame retardants functions as follows. When a molded product obtained from a composition containing the flame retardant (E) is subjected to combustion, the flame retardant (E) in the molded product is expanded, and a foamed heat-insulating expanded layer is formed on the surface of the molded product. By virtue of this, not only is transmission of heat on the surface of the molded product to the inside thereof prevented but also supply of oxygen is cut off, whereby fire spread can be inhibited. On this account, it is particularly preferable to use the intumescent type flame retardant as the flame retardant (E).

Examples of commercial products of the flame retardants (E) include, as phosphorus flame retardants, Exolit AP422, Exolit AP423, Exolit AP462, Exolit AP750 and Exolit AP760 (all available from CLARIANT), PHOSMEL 200 (available from Nissan Chemical Industries, Ltd.), and Adekastab 2100JC and Adekastab 2200S (both available from ADEKA CORPORATION), and as a melamine flame retardant, MC-4000 (available from Nissan Chemical Industries, Ltd.).

The content of the flame retardant (E) is preferably 1 to 30% by mass, more preferably 3 to 20% by mass, particularly preferably 5 to 15% by mass, based on the total amount of the composition of the present invention. When the content of the flame retardant (E) is in the above range, a molded product, which has excellent creep resistance and is excellent in flame retardancy while having a large loss factor, can be obtained.

### [Additive (F)]

The composition of the present invention may further contain an additive (F) other than the aforesaid (A) to (E). Examples of the additives (F) include an anti-foaming agent, a moisture adsorbent, a catalyst and other materials.

The additives (F) may be used singly or may be used two or more kinds.

### <Anti-foaming agent>

From the viewpoint of obtaining a molded product having excellent creep resistance and other viewpoints, it is preferable that no air bubbles are present in the molded product. On this account, an anti-foaming agent is preferably compounded in the composition of the present invention.

As the types of the anti-foaming agents, a silicone anti-foaming agent and a mineral oil anti-foaming agent can be mentioned, and in each of them, there are aqueous type, solvent type and solvent-free type. In order to inhibit shrinkage during the formation of a molded product, a solvent-free silicone anti-foaming agent is preferable in the present invention, and this anti-foaming agent is preferably contained in an amount of 0 to 3% by mass based on the total amount of the composition of the present invention. A commercial product of the solvent-free silicone anti-foaming agent is, for example, Dow Corning Toray SAG-47 (available from Dow Corning Toray Co., Ltd.).

The anti-foaming agents may be used singly or may be used two or more kinds.

### <Moisture adsorbent>

When a molded product is formed from a composition wherein moisture which may be contained in the atmosphere, the inorganic particles (C) or the inorganic pigment (D) has been incorporated into the system, there is a possibility of foaming caused by the reaction of isocyanate that is a curing agent with the moisture. In order to inhibit this foaming, it is preferable to remove the moisture from the system, and on this account, it is preferable to add a moisture adsorbent to the composition of the present invention.

The moisture adsorbent is preferably added in an amount of 0 to 10% by mass based on the total amount of the composition of the present invention.

The moisture adsorbents may be used singly or may be used two or more kinds.

The moisture adsorbent is not specifically restricted as long as it has moisture adsorbing ability, and a hitherto publicly known substance can be used. A commercial product of the moisture adsorbent is, for example, Molecular Sieve 4A Powder (available from Union Showa K.K.).

### <Catalyst>

The composition of the present invention may contain a catalyst for accelerating the reaction of the castor oil polyol (A) with the isocyanate (B). Examples of such catalysts include tin carboxylates, amine catalysts, metal carboxylates other than tin carboxylates, and 1,8-diazabicyclo[5,4,0]undecene-7 (DBU) salts. Examples of the tin carboxylates include dibutyltin dilaurate, dibutyltin diacetate and tin octylate. Examples of the amine catalysts include triethylamine, triethylenediamine and tetramethylbutanediamine. Examples of the metal carboxylates other than tin carboxylates include cobalt octylate, manganese octylate and zinc octylate. Examples of the DBU salts include DBU-stearate, DBU-oleate and DBU-formate.

Examples of commercial products of these catalysts include GLECK TL (available from DIC Corporation), DABCO 33-LV (available from Air Products Japan, Inc.), NEOSTANN U-28 (available from Nitto Kasei Co., Ltd.) and Triethylamine (available from Daicel Corporation).

The catalyst is preferably contained in an amount of 0 to 3% by mass based on the total amount of the composition of the present invention.

The catalysts may be used singly or may be used two or more kinds.

### <Other materials>

The composition of the present invention can further contain a wetting dispersant, a surface conditioner, a rheology controlling agent, a leveling agent, a plasticizer or a solvent when needed, within limits not detrimental to the object of the present invention.

These other materials may be each used singly or may be each used two or more kinds.

According to the present invention, a composition which has high fluidity even if it is solvent-free can be obtained especially when the castor oil polyol (A) having a viscosity in the aforesaid range is used, and therefore, the composition of the present invention preferably contains no solvent from the viewpoint that a molded product hardly suffering thermal deformation or cure shrinkage can be formed, and other viewpoints. In order to obtain a composition of higher fluidity, however, a solvent may be used depending upon the use purpose.

The viscosity of the composition of the present invention, as measured at 23°C by the use of a BM type viscometer, is preferably not more than 40, 000 mPa·s, more preferably not more than 30,000 mPa·s. The composition having such a viscosity exhibits high fluidity, and formation of a molded product by a method of casting becomes easy, so that such a viscosity is desirable.

### [Preparation process for vibration-damping urethane resin composition]

The composition of the present invention can be prepared by mixing the components (A) to (C), and if necessary, the components (D) to (F). From the viewpoint of storage stability, the composition of the present invention is desired to be of a two component type consisting of a main agent containing the component (A) and a curing agent containing the component (B). In this case, the inorganic particles (C) may be compounded in any of the main agent and the curing agent, but they are preferably compounded in the main agent. Also the inorganic pigment (D), the flame retardant (E) and the additives (F) may be compounded in any of the main agent and the curing agent, but the inorganic pigment (D) and the flame retardant (E) are preferably compounded in the main agent. Of the additives (F), the catalyst is preferably compounded in the main agent.

By mixing the main agent with the curing agent, the composition of the present invention can be prepared.

If air is incorporated during the preparation of the main agent or mixing of the main agent with the curing agent, air bubbles remain inside the resulting molded product and cause cracking or permanent set in fatigue. On this account, it is preferable to reduce the amount of air incorporated into the composition by carrying out a defoaming step in the preparation of the main agent or carrying out stirring at a low rotational speed in the mixing of the main agent with the curing agent.

### «Vibration-damping urethane resin molded product»

The vibration-damping urethane resin molded product of the present invention (also referred to as a "molded product of the present invention" hereinafter) is formed from the above-mentioned composition of the present invention.

On this account, the molded product of the present invention has a high vibration-damping effect, is excellent in resistance to compressive load and impact resistance and less suffers plastic deformation due to heat.

It is preferable that the molded product of the present invention satisfies the following requirements (1) and (2).
(1) The loss factor (tanδ) at 80°C and 1 Hz is not less than 0.4.
(2) The creep change ratio given when a load of 4.5 MPa is applied at 70°C for one week is not more than 25%.

It is more preferable that the molded product of the present invention further satisfies the following requirement (3).
(3) The flammability satisfies HB criteria of the UL94 standard.

### [Loss factor]

The loss factor is a ratio of a loss shear modulus (G") to a storage shear modulus (G'), G"/G', is represented by tanδ, and is an indication showing to what extent the molded product converts vibration energy to thermal energy when the molded product is deformed. As the value of tanδ becomes larger, the molded product converts the vibration energy to thermal energy more, that is to say, the molded product has a vibration-damping effect. From the viewpoint that a molded product having excellent vibration-damping properties is obtained, and other viewpoints, tanδ at 80°C and 1 Hz is preferably not less than 0.4, more preferably not less than 0.5, particularly preferably not less than 0.6.

The loss factor can be specifically measured by the method described in the working examples mentioned later.

### [Creep change ratio]

When a heavy load is continuously applied to a resin-based material for a long period of time in a high-temperature atmosphere, the material sometimes undergoes plastic deformation, and this is called creep change. The creep change ratio given when a load of 4.5 MPa is applied for one week in an atmosphere of 70°C is desired to be lower, and is preferably not more than 25%, more preferably less than 20%. If the creep change ratio exceeds 25%, breakage or cracking of a molded product sometimes takes place with deformation.

The creep change ratio can be specifically measured by the method described in the working examples mentioned later.

The molded product having the above loss factor and creep change ratio can be readily formed by the use of the composition of the present invention.

### [Flammability]

Urethane resin is generally highly flammable and is classified as a flammable resin. For the purpose of preventing spreading of fire, materials for use in ships are required to have flame retardancy according to SOLAS (The International Convention for the Safety of Life at Sea).

As the certifying standard of flammability on plastic materials, UL94 standard (standard of U.S. flammability test established by Underwriters Laboratories Inc.) is most popular. The flammability of the molded product of the present invention can be evaluated by using a HB (horizontal burning) test that is an evaluation method for solid plastic materials, and it is preferable that the molded product satisfies the HB criteria. The flammability can be specifically measured by the method described in the working examples mentioned later.

The molded product having flame retardancy can be formed by, for example, using a composition containing the flame retardant (E) .

The molded product of the present invention can be specifically formed by using the composition of the present invention and carrying out casting, extrusion method, injection molding or RIM molding. The molded product can be formed also by applying the composition of the present invention onto a substrate using a spray, a roller or a brush and curing the composition.

Examples of the substrates include concrete, mortar, slate plate, plywood, tile, metal, glass, film and fiber. These substrates may have been subjected to surface treatment.

Especially when the composition of the present invention having high fluidity is used, it is preferable to form the molded product of the present invention by pouring the composition directly into a place (target place) where the molded product of the present invention is intended to be formed and then curing the composition. According to this method, even a narrow space can be sufficiently filled with the molded product, so that such a method is preferable.

The molded product of the present invention can be preferably used for things that generate vibration, such as ships, automobiles, railroads, aircrafts, buildings, industrial equipments, household electrical appliances and precision equipments, and the molded product of the present invention is particularly suitable for use in such a high-temperature atmosphere as that around an engine, among them.

The molded product of the present invention is suitable for use particularly at a place under a marine engine among them, and when a main engine and an auxiliary engine are mounted as marine engines, the molded product of the present invention can be preferably used at a place under the auxiliary engine. The reason is that since the molded product of the present invention is excellent in vibration-damping properties, the auxiliary engine can be protected from vibration of the main engine when the auxiliary engine is not running.

### Examples

The present invention is more specifically described with reference to the following examples, but it should be construed that the present invention is in no way limited to those examples. In the description of the following examples, the term "part (s)" means "part(s) by mass", unless otherwise noted.

### [Preparation of urethane resin composition and molded product]

### [Example 1]

In a container, 80.0 parts of a castor oil polyol URIC H-102 (available from Itoh Oil Chemicals Co., Ltd.) and 20.0 parts of Riken Resin LA-15-100 (available from Mikiriken Industrial Co., Ltd.) were placed, and they were dispersed by the use of a high-speed disperser at not higher than 500 rpm for 10 minutes so that the outer shells of microcapsules might not be broken. Thereafter, 0.2 part of Dow Corning Toray SAG-47 (available from Dow Corning Toray Co., Ltd.), 3.0 parts of Molecular Sieve 4A Powder (available from Union Showa K.K.) and 0.1 part of 10% GLECK TL (available from DIC Corporation) were successively added and stirred to prepare a main agent. To the main agent, 70.1 parts of Millionate MTL (available from Nippon Polyurethane Industry Co., Ltd.) were added as a curing agent so that the NCO/OH ratio based on the main agent might become 1.06, and they were mixed and then defoamed to prepare a urethane resin composition.

After the defoaming, the urethane resin composition was poured into a mold of 100×100×25 mm and aged at 23°C for 16 hours to cure the composition, whereby a urethane resin molded product was prepared.

### [Examples 2 to 17, Comparative Examples 1 to 7]

Urethane resin compositions were prepared in the same manner as in Example 1, except that the types and the amounts of the raw materials were changed as shown in Table 2 or 4, and then urethane resin molded products were prepared in the same manner as in Example 1, except that the resulting compositions were used. Details of the materials in Table 2 or 4 are as shown in Table 1.

### [Example 18]

In a container, 80.0 parts of a castor oil polyol URIC H-81 (available from Itoh Oil Chemicals Co., Ltd.) and 15.0 parts of Exolit AP462 (available from CLARIANT) were placed, and they were dispersed by the use of a high-speed disperser at 1000 rpm for 15 minutes. Thereafter, 20.0 parts of Riken Resin LA-15-100 (available from Mikiriken Industrial Co., Ltd.) were added, and they were dispersed by the use of a high-speed disperser at not higher than 500 rpm for 10 minutes so that the outer shells of microcapsules might not be broken. After the dispersion process was completed, 0.3 part of Dow Corning Toray SAG-47 (available from Dow Corning Toray Co., Ltd.), 3.0 parts of Molecular Sieve 4A Powder (available from Union Showa K.K.) and 0.1 part of 10% GLECK TL (available from DIC Corporation) were successively added and stirred to prepare a main agent. To the main agent, 74.5 parts of Millionate MTL (available from Nippon Polyurethane Industry Co., Ltd.) were added as a curing agent so that the NCO/OH ratio based on the main agent might become 1.06, and they were mixed and then defoamed to prepare a urethane resin composition.

After the defoaming, the urethane resin composition was poured into a mold of 100×100×25 mm and aged at 23°C for 16 hours to cure the composition, whereby a urethane resin molded product was prepared.

### [Examples 19 to 25]

Urethane resin compositions were prepared in the same manner as in Example 18, except that the types and the amounts of the raw materials were changed as shown in Table 3, and then urethane resin molded products were prepared in the same manner as in Example 18, except that the resulting compositions were used. Details of the materials in Table 3 are as shown in Table 1.

### [Measurement of loss factor]

Measurement of loss factors tanδ of the urethane resin molded products prepared in Examples 1 to 25 and Comparative Examples 1 to 7 was carried out. The measurement of loss factors was carried out using, as an apparatus, "Shimadzu Servopulser EHF-EG10-20L Type, manufactured by Shimadzu Corporation" and using, as software, fatigue/durability test mode of "Shimadzu Servopulser 4830 Type Control Device". The test temperature was set at 80°C, and a procedure, in which while applying vibration of a frequency of 1 Hz to the urethane resin molded product, a load of 5 kN was applied to the molded product in the compression direction, and the load was reduced down to 1 kN, was taken as one cycle, and the procedure was repeated 1000 cycles to measure a loss factor. The results of the loss factors were evaluated by the following four criteria. The results are set forth in Tables 2 to 4.

4: 0.6≤tanδ
3: 0.5≤tanδ<0.6
2: 0.4≤tanδ<0.5
1: tanδ<0.4

The evaluation criteria 2 to 4 were each regarded as pass ○, and the evaluation criterion 1 was regarded as fail ×.

### [Measurement of creep change ratio]

Using the urethane resin compositions obtained in Examples 1 to 25 and Comparative Examples 1 to 7, urethane resin molded products were prepared in the same manner as in Example 1 or Example 18, except that a mold of 100×100×5 mm was used as a mold. The urethane resin molded products prepared were aged by the method based on ASTM D621. After the aging, each molded product was cut into four specimens each having a size of 5×5×5 mm, and a load of 4.5 MPa was applied to the specimen in the thickness direction of the specimen for one week in an atmosphere of 70°C. A thickness of the specimen before application of a load and a thickness thereof after application of a load for one week were measured, and a change ratio in the thickness direction of the specimen between before and after application of a load was calculated. Change ratios of the four specimens were measured in the same manner as above, and the average was taken as a creep change ratio. Further, the creep change ratio was evaluated by the following three criteria. The results are set forth in Tables 2 to 4.

3: creep change ratio < 20%
2: 20 ≤ creep change ratio ≤ 25%
1: The specimen is broken, or the specimen is deformed immediately after application of a load.

The evaluation criteria 2 and 3 were each regarded as pass ○, and the evaluation criterion 1 was regarded as fail ×.

### [Evaluation of flammability]

Using the urethane resin compositions obtained in Examples 3 and 18 to 25, urethane resin molded products were prepared in the same manner as in Example 1 or Example 18, except that a mold of 150 ×125×1 mm was used as a mold. Thereafter, each molded product was processed into a size of a length of 127 mm and a width of 12.7 mm to prepare a specimen. In the specimen, marks were put at the positions of 25 mm and 100 mm from one end of the specimen in the lengthwise direction. Five specimens were prepared for each molded product. After the specimens prepared were held at a temperature of 23°C and a relative humidity of 50% for 48 hours, the test was carried out.

On the basis of the procedure of the HB (horizontal burning) test of UL94 standard, a test was carried out five times for each molded product in the following manner to evaluate flammability. Specimens satisfying the HB criteria meet the following requirement.
1. Not have a burning rate exceeding 40 mm/min over a 75 mm span for specimens having a thickness of 3.0 mm to 13 mm; or
2. Not have a burning rate exceeding 75 mm/min over a 75 mm span for specimens having a thickness of less than 3.0 mm; or
3. Regardless of the thickness of a specimen, the specimen ceases to burn before the flame reaches the 100 mm mark.

In the case of this test, the thickness of the specimen prepared was 1 mm, and therefore, the requirement to satisfy the HB criteria is that the specimen does not have a burning rate exceeding 75 mm/min over a 75 mm span or that the specimen ceases to burn before the flame reaches the 100 mm mark.

In the test method, an end of the specimen, said end being farthest from the 25 mm mark, was fixed, and the specimen was placed horizontally in the lengthwise direction of the specimen but was inclined at 45° in the width direction. Subsequently, a flame of a burner was brought into contact with an end of the specimen, said end being not fixed, for 30 seconds, and thereafter, the burner was taken away. When the tip of a flame of the burning specimen reached the 25 mm mark within 30 seconds after the flame of the burner was brought into contact with the end of the specimen, the burner was immediately kept away from the specimen. When the fire spread even after the flame of the burner was taken way, the burning time in seconds was measured with the proviso that the time required for the tip of a flame of the burning specimen to reach the 25 mm mark was 0 second, and a burning rate was determined. When the fire spreading stopped after the flame of the burner was taken away, the point at which the specimen had ceased to burn was measured. The results of the flammability test were evaluated by the following three criteria. The results are set forth in Tables 2 to 4. With regard to the results set forth in Tables 2 to 4, for example, when all of the tests of five times satisfied the following [3], the molded product was evaluated as [3], and when at least one of the tests of five times resulted in the following [2], the molded product was evaluated as [2]. That is to say, the results set forth in Tables 2 to 4 each indicate the lowest evaluation result of the tests of five times.

3: Burning rate≤75 mm/min, and the specimen ceases to burn before the flame reaches the 100 mm mark.
2: Burning rate≤75 mm/min, or the specimen ceases to burn before the flame reaches the 100 mm mark.
1: Burning rate>75 mm/min, and the specimen burns up to the 100 mm mark.

The evaluation criteria 2 and 3 were each regarded as pass ○, and the evaluation criterion 1 was regarded as fail ×.

**[Table 1]**

| | Symbol | Trade name | Manufacturer's name | Ingredient name |
|---|---|---|---|---|
| Main agent | (A)-1 | URIC H-102 | Itoh Oil Chemicals Co., Ltd. | castor oil polyol (OH%: 9.70, hydroxyl value mgKOH/g: 320, number of functional groups: 5, viscosity: 1000 to 1200 mPa·s) |
| | (A)-2 | URIC H-92 | Itoh Oil Chemicals Co., Ltd. | castor oil polyol (OH%: 9.70, hydroxyl value mgKOH/g: 320, number of functional groups: 4, viscosity: 1000 to 1300 mPa·s) |
| | (A)-3 | URIC H-81 | Itoh Oil Chemicals Co., Ltd. | castor oil polyol (OH%: 10.30, hydroxyl value mgKOH/g: 340, number of functional groups: 3, viscosity: 1000 to 1400 mPa·s) |
| | (a)-1 | Sannix GP-600 | Sanyo Chemical Industries, Ltd. | polyether polyol (OH%: 8.48, hydroxyl value mgKOH/g: 280, number of functional groups: 3) |
| | (a)-2 | Nipporan 800 | Nippon Polyurethane Industry Co., Ltd. | polyester polyol (OH%: 8.79, hydroxyl value mgKOH/g: 290, number of functional groups: 3) |
| | (a)-3 | Voranol 3022J | Dow Chemical Japan Limited | polyether polyol (OH%: 1.70, hydroxyl value mgKOH/g: 56, number of functional groups: 3) |
| | (a)-4 | Poly bd R-45HT | Idemitsu Kosan Co., Ltd. | polybutadiene polyol (OH%: 1.43, hydroxyl value mgKOH/g: 47.1, number of functional groups: 2.5) |
| Main agent | (C)-1 | Riken Resin LA-5-100 | Mikiriken Industrial Co., Ltd. | inorganic microcapsules filled with paraffin, having melting point of 5°C |
| | (C)-2 | Riken Resin LA-15-100 | Mikiriken Industrial Co., Ltd. | inorganic microcapsules filled with paraffin, having melting point of 15°C |
| | (C)-3 | Riken Resin LA-25-100 | Mikiriken Industrial Co., Ltd. | inorganic microcapsules filled with paraffin, having melting point of 25°C |
| | (c)-1 | Prethermo C25 | Daiwa Chemical Industries Co., Ltd. | organic microcapsules filled with paraffin, having melting point of 25°C |
| | (D)-1 | Mica Powder 200-Mesh | Fukuoka Talc Co., Ltd. | mica |
| | (D)-2 | NYGLOS 4W | NYCO MINERALS, INC. | wollastonite (particle diameter: 4 µm) |
| | (D)-3 | TK-1 | Tono Keifun Kogyo Cooperative Association | silica |
| | (D)-4 | R-5N | Sakai Chemical Industry Co., Ltd. | titanium dioxide |
| | (E)-1 | Exolit AP462 | CLARIANT | intumescent type flame retardant (non-halogen type) |
| | (E)-2 | PHOSMEL 200 | Nissan Chemical Industries, Ltd. | intumescent type flame retardant (non-halogen type) |
| | (E)-3 | Adekastab 2100JC | ADEKA CORPORATION | intumescent type flame retardant (non-halogen type) |
| | (E)-4 | MC-4000 | Nissan Chemical Industries, Ltd. | melamine-based flame retardant (non-halogen type) |
| | (F)-1 | Dow Corning Toray SAG-47 | Dow Corning Toray Co., Ltd. | anti-foaming agent |
| | (F)-2 | Molecular Sieve 4A Powder | Union Showa KK | moisture adsorbent |
| | (F)-3 | GLECK TL (active ingredient 10%) | DIC Corporation | tin catalyst |
| | (F)-4 | GLECK TL (active ingredient 1%) | DIC Corporation | tin catalyst |
| Curing agent | (B)-1 | Millionate MTL | Nippon Polyurethane Industry Co., Ltd. | carbodiimide-modified MDI (NCO%: 29) |
| | (B)-2 | Cosmonate T-80 | Mitsui Chemicals, Inc. | tolylene diisocyante (NCO%: 48.8) |

**[Table 2]**

| | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 | Ex. 16 | Ex. 17 |
|---|---|---|---|---|---|---|---|---|---|---|---|---|---|---|---|---|---|---|---|
| Composition | Main agent | (A)-1 | 80.0 | | | 80.0 | 80.0 | 80.0 | 80.0 | | | | | | | | | | |
| | | (A)-2 | | 80.0 | | | | | | | | | | | | | | | |
| | | (A)-3 | | | 80.0 | | | | | 80.0 | 80.0 | 80.0 | 80.0 | 80.0 | 80.0 | 80.0 | 80.0 | 80.0 | 80.0 |
| | | (C)-1 | | | | 20.0 | | | | | | | | | | | | | |
| | | (C)-2 | 20.0 | 20.0 | 20.0 | | | 10.0 | 10.0 | 50.0 | 20.0 | 20.0 | 20.0 | 20.0 | 20.0 | 20.0 | 40.0 | 10.0 | 20.0 |
| | | (C)-3 | | | | | 20.0 | | | | | | | | | | | | |
| | | (D)-1 | | | | | | 10.0 | | | 20.0 | | | | | | | | |
| | | (D)-2 | | | | | | | 10.0 | | | | | | | | | | |
| | | (D)-3 | | | | | | | | | | 20.0 | | 10.0 | 40.0 | 40.0 | | | 30.0 |
| | | (D)-4 | | | | | | | | | | | 20.0 | | | | | | |
| | | (E)-1 | | | | | | | | | | | | | | | | | |
| | | (E)-2 | | | | | | | | | | | | | | | | | |
| | | (E)-3 | | | | | | | | | | | | | | | | | |
| | | (E)-4 | | | | | | | | | | | | | | | | | |
| | | (F)-1 | 0.2 | 0.3 | 0.3 | 0.2 | 0.2 | 0.2 | 0.2 | 0.3 | 0.3 | 0.3 | 0.3 | 0.3 | 0.3 | 0.3 | 0.3 | 0.3 | 0.3 |
| | | (F)-2 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | | (F)-3 | 0.1 | 0.1 | 0.1 | 0.1 | 0.1 | 0.1 | 0.1 | 0.1 | 0.1 | 0.1 | 0.1 | 0.1 | 0.1 | | 0.1 | 0.1 | 0.1 |
| | | (F)-4 | | | | | | | | | | | | | | 0.3 | | | |
| | | (Subtotal) | 103.3 | 103.4 | 103.4 | 103.3 | 103.3 | 103.3 | 103.3 | 133.4 | 123.4 | 123.4 | 123.4 | 113.4 | 143.4 | 143.6 | 123.4 | 93.4 | 133.4 |
| | | OH% | 7.51 | 7.5 | 7.97 | 7.51 | 7.51 | 7.51 | 7.51 | 6.18 | 6.68 | 6.68 | 6.68 | 7.27 | 5.75 | 5.74 | 6.68 | 8.82 | 6.18 |
| Composition | Curing agent | (B)-1 | 70.1 | 70.1 | 74.4 | 70.1 | 70.1 | 70.1 | 70.1 | 74.5 | 74.5 | 74.5 | 74.5 | 74.5 | 74.5 | | 74.5 | 74.4 | 74.5 |
| | | (B)-2 | | | | | | | | | | | | | | 44.2 | | | |
| | (Total) | | 173.4 | 173.5 | 177.8 | 173.4 | 173.4 | 173.4 | 173.4 | 207.9 | 197.9 | 197.9 | 197.9 | 187.9 | 217.9 | 187.8 | 197.9 | 167.8 | 207.9 |
| | NCO/OH equivalent ratio | | 1.06 | 1.06 | 1.06 | 1.06 | 1.06 | 1.06 | 1.06 | 1.06 | 1.06 | 1.06 | 1.06 | 1.06 | 1.06 | 1.06 | 1.06 | 1.06 | 1.06 |
| | Inorganic particle content (mass%) | | 11.5 | 11.5 | 11.2 | 11.5 | 11.5 | 5.8 | 5.8 | 24.1 | 10.1 | 10.1 | 10.1 | 10.6 | 9.2 | 10.6 | 20.2 | 6.0 | 9.6 |
| | Inorganic pigment content (mass%) | | 0.0 | 0.0 | 0.0 | 0.0 | 0.0 | 5.8 | 5.8 | 0.0 | 10.1 | 10.1 | 10.1 | 5.3 | 18.4 | 21.3 | 0.0 | 0.0 | 14.4 |
| | Flame retardant content (mass%) | | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 |
| | | | | | | | | | | | | | | | | | | | |
| Evaluation | Loss factor | tanδ | ○ | ○ | ○ | ○ | ○ | ○ | ○ | ○ | ○ | ○ | ○ | ○ | ○ | ○ | ○ | ○ | ○ |
| | | | 0.61 | 0.63 | 0.72 | 0.60 | 0.60 | 0.47 | 0.48 | 0.56 | 0.56 | 0.61 | 0.54 | 0.70 | 0.75 | 0.77 | 0.69 | 0.83 | 0.67 |
| | | Evaluation | 4 | 4 | 4 | 4 | 4 | 2 | 2 | 3 | 3 | 4 | 3 | 4 | 4 | 4 | 4 | 4 | 4 |
| | Creep change | Change ratio | ○ | ○ | ○ | ○ | ○ | ○ | ○ | ○ | ○ | ○ | ○ | ○ | ○ | ○ | ○ | ○ | ○ |
| | | | 20% | 18% | 14% | 20% | 20% | 14% | 14% | 17% | 11% | 14% | 11% | 14% | 12% | 8% | 13% | 13% | 12% |
| | | Evaluation | 2 | 3 | 3 | 2 | 2 | 3 | 3 | 3 | 3 | 3 | 3 | 3 | 3 | 3 | 3 | 3 | 3 |
| | Flame retardancy | Evaluation | | | × 1 | | | | | | | | | | | | | | |

**[Table 3]**

| | | | Ex. 18 | Ex. 19 | Ex. 20 | Ex. 21 | Ex. 22 | Ex. 23 | Ex. 24 | Ex. 25 |
|---|---|---|---|---|---|---|---|---|---|---|
| | | (A)-1 | | | | | | | | |
| | | (A)-2 | | | | | | | | |
| | | (A)-3 | 80.0 | 80.0 | 80.0 | 80.0 | 80.0 | 80.0 | 80.0 | 80.0 |
| | | (C)-1 | | | | | | | | |
| | | (C)-2 | 20.0 | 20.0 | 20.0 | 20.0 | 20.0 | 20.0 | 20.0 | 20.0 |
| | | (C)-3 | | | | | | | | |
| | | (D)-1 | | | | | | | | |
| | | (D)-2 | | | | | | | | |
| | | (D)-3 | | | | | | | | |
| | | (D)-4 | | | | | | | | |
| Composition | Main agent | (E)-1 | 15.0 | 30.0 | | | | | | |
| | | (E)-2 | | | 15.0 | 30.0 | | | | |
| | | (E)-3 | | | | | 15.0 | 30.0 | | |
| | | (E)-4 | | | | | | | 15.0 | 30.0 |
| | | (F)-1 | 0.3 | 0.3 | 0.3 | 0.3 | 0.3 | 0.3 | 0.3 | 0.3 |
| | | (F)-2 | 3.0 | 3.0 | 3.0 | 3.0 | 3.0 | 3.0 | 3.0 | 3.0 |
| | | (F)-3 | 0.1 | 0.1 | 0.1 | 0.1 | 0.1 | 0.1 | 0.1 | 0.1 |
| | | (F)-4 | | | | | | | | |
| | | (Subtotal) | 118.4 | 133.4 | 118.4 | 133.4 | 118.4 | 133.4 | 118.4 | 133.4 |
| | | OH% | 6.18 | 6.18 | 6.18 | 6.18 | 6.18 | 6.18 | 6.18 | 6.18 |
| Composition | Curing agent | (B)-1 | 74.5 | 74.5 | 74.5 | 74.5 | 74.5 | 74.5 | 74.5 | 74.5 |
| | | (B)-2 | | | | | | | | |
| | | (Total) | 192.9 | 207.9 | 192.9 | 207.9 | 192.9 | 207.9 | 192.9 | 207.9 |
| | NCO/OH equivalent ratio | | 1.06 | 1.06 | 1.06 | 1.06 | 1.06 | 1.06 | 1.06 | 1.06 |
| | Inorganic particle content (mass%) | | 10.4 | 9.6 | 10.4 | 9.6 | 10.4 | 9.6 | 10.4 | 9.6 |
| | Inorganic pigment content (mass%) | | 0.0 | 0.0 | 0.0 | 0.0 | 0.0 | 0.0 | 0.0 | 0.0 |
| | Flame retardant content (mass%) | | 7.8 | 14.4 | 7.8 | 14.4 | 7.8 | 14.4 | 7.8 | 14.4 |
| | | | | | | | | | | |
| Evaluation | Loss factor | tanδ | ○ | ○ | ○ | ○ | ○ | ○ | ○ | ○ |
| | | | 0.67 | 0.70 | 0.53 | 0.55 | 0.58 | 0.55 | 0.65 | 0.53 |
| | | Evaluation | 4 | 4 | 3 | 3 | 3 | 3 | 4 | 3 |
| | Creep change | Change ratio | ○ | ○ | ○ | ○ | ○ | ○ | ○ | ○ |
| | | | 23% | 16% | 21% | 17% | 17% | 17% | 20% | 20% |
| | | Evaluation | 2 | 3 | 2 | 3 | 3 | 3 | 2 | 2 |
| | Flame retardancy | Evaluation | ○ | ○ | ○ | ○ | ○ | ○ | ○ | ○ |
| | | | 3 | 3 | 3 | 3 | 3 | 3 | 2 | 2 |

**[Table 4]**

| | | | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|
| | | (A)-1 | 100.0 | 80.0 | | | | | |
| | | (A)-2 | | | | | | | |
| | | (A)-3 | | | | | 80.0 | | |
| | | (a)-1 | | | 80.0 | | | | |
| | | (a)-2 | | | | 80.0 | | | |
| | | (a)-3 | | | | | | 80.0 | |
| | | (a)-4 | | | | | | | 80.0 |
| | | (C)-2 | | | 20.0 | 20.0 | | | |
| | | (C)-3 | | | | | | 20.0 | 20.0 |
| Composition | Main agent | (c)-1 | | 20.0 | | | | | |
| | | (D)-1 | | | | | | | |
| | | (D)-2 | | | | | | | |
| | | (D)-3 | | | | | | | |
| | | (D)-4 | | | | | | | |
| | | (E)-1 | | | | | | | |
| | | (E)-2 | | | | | | | |
| | | (E)-3 | | | | | | | |
| | | (E)-4 | | | | | | | |
| Composition | Main agent | (F)-1 | 0.2 | 0.2 | 0.3 | 0.3 | 0.3 | 0.3 | 0.3 |
| | | (F)-2 | 3.0 | 3.0 | 3.0 | 3.0 | 3.0 | 3.0 | 3.0 |
| | | (F)-3 | 0.1 | 0.1 | 0.1 | 0.1 | 0.1 | | |
| | | (F)-4 | | | | | | 0.6 | 0.6 |
| | | (Subtotal) | 103.3 | 103.3 | 103.4 | 103.4 | 83.4 | 103.9 | 103.9 |
| | | OH% | 9.39 | 7.51 | 6.56 | 6.8 | 9.88 | 1.31 | 1.1 |
| | Curing agent | (B)-1 | 87.6 | 70.1 | 61.3 | 63.5 | 74.4 | 12.3 | 10.3 |
| | | (Total) | 190.9 | 173.4 | 164.7 | 166.9 | 157.8 | 116.2 | 114.2 |
| | NCO/OH equivalent ratio | | 1.06 | 1.06 | 1.06 | 1.06 | 1.06 | 1.06 | 1.06 |
| | Inorganic particle content (mass%) | | 0.0 | 11.5 | 12.1 | 12.0 | 0.0 | 17.2 | 17.5 |
| | Inorganic pigment content (mass%) | | 0.0 | 0.0 | 0.0 | 0.0 | 0.0 | 0.0 | 0.0 |
| | | | | | | | | | |
| Evaluation | Loss factor | tanδ | × | × | ○ | × | × | × | × |
| | | | 0.20 | 0.22 | 0.60 | 0.12 | 0.11 | 0.36 | 0.33 |
| | | Evaluation | 1 | 1 | 4 | 1 | 1 | 1 | 1 |
| | Creep change | Change ratio | ○ | ○ | × | ○ | ○ | × | × |
| | | | 24% | 25% | broken | 5% | 7% | deformed | deformed |
| | | Evaluation | 2 | 2 | 1 | 3 | 3 | 1 | 1 |

## Claims

1. A composition, which is a vibration-damping urethane resin composition comprising a castor oil polyol (A), an isocyanate (B) and inorganic particles (C) containing a phase change material.

2. The composition of claim 1, wherein the hydroxyl value of the castor oil polyol (A) is ≥ 300 mg KOH/g and the number of functional groups thereof is ≥ 3.

3. The composition of claim 1 or 2, wherein the viscosity of the castor oil polyol (A) at 25°C is ≤ 8,000 mPa·s as measured by an Ubbelohde viscometer in accordance with JIS Z8803.

4. The composition of any of claims 1-3, containing the inorganic particles (C) in amounts of 1-25 mass-%.

5. The composition of any of claims 1-4, wherein the phase change material is at least one kind selected from paraffin, wax, a fatty acid and a polyalkylene glycol.

6. The composition of any of claims 1-5, wherein the melting point of the phase change material is -30 to 200°C.

7. The composition of any of claims 1-6, wherein the isocyanate (B) is at least one kind selected from carbodiimide-modified diphenylmethane diisocyanate and tolylene diisocyanate.

8. The composition of any of claims 1-7, further comprising one, two or three kind(s) selected from an inorganic pigment (D), a flame retardant (E) and an additive (F).

9. The composition of any of claims 1-8, being of a two component type.

10. A molded product, which is a vibration-damping urethane resin molded product formed from the composition of any of claims 1-9.

11. The molded product of claim 10, having
(1) a loss factor (tanδ) at 80°C and 1 Hz of ≥ 0.4 as measured according to the chapter "measurement of loss factor" as described in paragraph [0098] of the description, and
(2) a creep change ratio given when a load of 4.5 MPa is applied at 70°C for one week of ≤ 25% as measured according to the chapter "measurement of creep change ratio" as described in paragraph [0100] of the description.

12. The molded product of claim 11, the flammability of which satisfies HB criteria of the UL94 standard as measured according to the chapter "evaluation of flammability" as described in paragraphs [0102] and [0103] of the description.

13. The use of the molded product of any of claims 10-12 at a place under a marine engine.

14. A method for forming a vibration-damping urethane resin molded product, comprising pouring the composition of any of claims 1-9 into a target place to form a molded product.

## Patentansprüche

1. Zusammensetzung, die eine schwingungsdämpfende Urethanharzzusammensetzung ist, welche ein Kastoröl-Polyol (A), ein Isocyanat (B) und anorganische Teilchen (C), die ein Phasenübergangsmaterial enthalten, umfasst.

2. Zusammensetzung nach Anspruch 1, wobei der Hydroxylwert des Kastoröl-Polyols (A) ≥ 300 mg KOH/g beträgt und die Zahl an funktionellen Gruppen davon ≥ 3 ist.

3. Zusammensetzung nach Anspruch 1 oder 2, wobei die Viskosität des Kastoröl-Polyols (A) bei 25 °C ≤ 8.000 mPa·s beträgt, gemessen mit einem Ubbelohde-Viskosimeter gemäß JIS Z8803.

4. Zusammensetzung nach mindestens einem der Ansprüche 1-3, welche die anorganischen Teilchen (C) in Mengen von 1-25 Massen-% enthält.

5. Zusammensetzung nach mindestens einem der Ansprüche 1-4, wobei das Phasenübergangsmaterial mindestens eine Art ist, ausgewählt aus Paraffin, Wachs, einer Fettsäure und einem Polyalkylenglykol.

6. Zusammensetzung nach mindestens einem der Ansprüche 1-5, wobei der Schmelzpunkt des Phasenübergangsmaterials -30 bis 200 °C beträgt.

7. Zusammensetzung nach mindestens einem der Ansprüche 1-6, wobei das Isocyanat (B) mindestens eine Art ist, ausgewählt aus mit Carbodiimid modifiziertem Diphenylmethandiisocyanat und Tolylendiisocyanat.

8. Zusammensetzung nach mindestens einem der Ansprüche 1-7, welche ferner eine, zwei oder drei Art(en) umfasst, ausgewählt aus einem anorganischen Pigment (D), einem Flammschutzmittel (E) und einem Additiv (F).

9. Zusammensetzung nach mindestens einem der Ansprüche 1-8, welche eine der zwei-Komponenten-Art ist.

10. Formteil, das ein schwingungsdämpfendes Urethanharzformteil, gebildet aus der Zusammensetzung nach mindestens einem der Ansprüche 1-9, ist.

11. Formteil nach Anspruch 10, mit
(1) einem Verlustfaktor (tanδ) bei 80 °C und 1 Hz von ≥ 0,4, gemessen gemäß dem in Paragraph [0098] der Beschreibung beschriebenen Kapitel "Messung des Verlustfaktors", und
(2) einem Kriechänderungsverhältnis, das gegeben ist, wenn eine Belastung von 4,5 MPa bei 70 °C eine Woche lang ausgeübt wird, von ≤ 25%, gemessen gemäß dem in Paragraph [0100] der Beschreibung beschriebenen Kapitel "Messung des Kriechänderungsverhältnisses".

12. Formteil nach Anspruch 11, wobei die Entflammbarkeit davon HB Kriterien des UL94 Standards entspricht, gemessen gemäß dem in den Paragraphen [0102] und [0103] der Beschreibung beschriebenen Kapitel "Beurteilung der Entflammbarkeit".

13. Verwendung des Formteils nach mindestens einem der Ansprüche 10-12 an einem Ort unter einem marinen Motor.

14. Verfahren zur Bildung eines schwingungsdämpfenden Urethanharzformteils, umfassend das Gießen der Zusammensetzung nach mindestens einem der Ansprüche 1-9 in einen Zielort so, dass ein Formteil ausgebildet wird.

## Revendications

1. Composition qui est une composition de résine d'uréthane amortissant les vibrations comprenant un polyol à base d'huile de ricin (A), un isocyanate (B) et des particules inorganiques (C) contenant un matériau à changement de phase.

2. Composition selon la revendication 1, dans laquelle la valeur hydroxyle du polyol à base d'huile de ricin (A) est ≥ 300 mg KOH/g et le nombre de groupes fonctionnels de celui-ci est ≥ 3.

3. Composition selon la revendication 1 ou 2, dans laquelle la viscosité du polyol à base d'huile de ricin (A) à 25 °C est ≤ 8 000 mPa·s telle que mesurée par un viscosimètre d'Ubbelohde selon la norme JIS Z8803.

4. Composition selon l'une quelconque des revendications 1-3, contenant les particules inorganiques (C) dans des quantités de 1-25 % en masse.

5. Composition selon l'une quelconque des revendications 1-4, dans laquelle le matériau à changement de phase est au moins un type sélectionné parmi la paraffine, la cire, un acide gras et un polyalkylène glycol.

6. Composition selon l'une quelconque des revendications 1-5, dans laquelle le point de fusion du matériau à changement de phase est -30 à 200°C.

7. Composition selon l'une quelconque des revendications 1-6, dans laquelle l'isocyanate (B) est au moins un type sélectionné parmi le diisocyanate de diphénylméthane modifié par un carbodiimide et le diisocyanate de tolylène.

8. Composition selon l'une quelconque des revendications 1-7, comprenant en outre un, deux ou trois types sélectionnés parmi un pigment inorganique (D), un retardateur de flammes (E) et un additif (F).

9. Composition selon l'une quelconque des revendications 1-8, qui est constituée d'un type à deux composants.

10. Produit moulé, qui est un produit moulé en résine d'uréthane amortissant les vibrations formé à partir de la composition selon l'une quelconque des revendications 1-9.

11. Produit moulé selon la revendication 10, ayant
(1) un facteur de perte (tanδ) à 80 °C et 1 Hz de ≥ 0,4 tel que mesuré selon le chapitre « mesure du facteur de perte » tel que décrit dans le paragraphe [0098] de la description et
(2) un rapport de changement de fluage donné lorsqu'une charge de 4,5 MPa est appliquée à 70°C pendant une semaine de ≤ 25 % tel que mesuré selon le chapitre « mesure du rapport de changement de fluage » tel que décrit dans le paragraphe [0100] de la description.

12. Produit moulé selon la revendication 11, dont l'inflammabilité répond à des critères HB de la norme UL94, telle que mesurée selon le chapitre « évaluation de l'inflammabilité » tel que décrit dans les paragraphes [0102] et [0103] de la description.

13. Utilisation du produit moulé selon l'une quelconque des revendications 10-12 à un endroit sous un moteur marin.

14. Procédé pour former un produit moulé en résine d'uréthane amortissant les vibrations, comprenant le coulage de la composition selon l'une quelconque des revendications 1-9 dans un endroit cible pour former un produit moulé.
